# EUROPÄISCHE PATENTSCHRIFT

(11) **EP 2 078 622 B1**
(45) Veröffentlichungstag und Bekanntmachung des Hinweises auf die Patenterteilung: **04.05.2011**
(21) Anmeldenummer: 08170055.1
(22) Anmeldetag: 27.11.2008
(51) Int. Cl.: B60C 9/20, B60C 9/28, B60C 9/30

(54) **Fahrzeugluftreifen**
Pneumatic tyres for a vehicle
Pneus de véhicule

(30) Priorität: 11.01.2008 DE 102008004001
(43) Veröffentlichungstag der Anmeldung: 15.07.2009
(73) Patentinhaber: Continental Reifen Deutschland GmbH, 30165 Hannover (DE)
(72) Erfinder: Volbers, Ralf, 30827 Garbsen (DE); Ludwig, Reinhard, Dr., 31848 Bad Münder (DE)
(74) Vertreter: Finger, Karsten

(56) Entgegenhaltungen:
- EP-A- 0 102 005
- EP-A- 1 149 714
- DE-A1- 1 931 268
- FR-A- 1 253 952

## Beschreibung

Die Erfindung betrifft einen Fahrzeugluftreifen mit einer Karkasse, mit einem profilierten Laufstreifen und mit einem zwischen Karkasse und Laufstreifen ausgebildeten Gürtel, der aus mehreren in radialer Richtung R des Reifens übereinander angeordneten und jeweils in Umfangsrichtung U des Reifens über den gesamten Umfang des Reifens erstreckte Gürtellagen aus jeweils parallel zueinander ausgerichtet angeordneten in Gummi eingebetteten fadenförmigen Festigkeitsträgern besteht, und der Gürtel in axialer Richtung A des Reifens eine Gürtelbreite B aufweist.

Derartige Fahrzeugreifen sind bekannt. So ist es beispielsweise üblich, Fahrzeugluftreifen radialer Bauart mit einer Karkasse aus einer oder mehreren Karkasslagen radialer Bauart und mit einem Gürtel aus zwei in radialer Richtung übereinander angeordneten Gürtellagen auszubilden. Die Festigkeitsträger beider Gürtellagen sind Stahlkorde. Beide Gürtellagen erstrecken sich im Wesentlichen über die gesamte Gürtelbreite. Zur Reduzierung von Steifigkeitssprüngen im Gürtelkantenbereich ist häufig eine Gürtellage geringfügig schmaler als die andere. Die Gürtellagen bei derartigen Reifen weisen jeweils in Gummi eingebettete Stahlkorde auf, die einen Neigungswinkel von 20 bis 38° zur Umfangsrichtung aufweisen, wobei die Stahlkorde der beiden Gürtellagen jeweils einen in axialer Richtung gesehene gegengerichtete Steigungsrichtung aufweisen. Auf diese Weise bilden die beiden Gürtellagen über die gesamte Gürtelbreite einen Kreuzverband. Zum Einsatz bei hohen Geschwindigkeiten werden bei derartigen Reifen häufig radial außerhalb dieser beiden Gürtellagen zusätzliche Bandagestreifen mit in Umfangsrichtung ausgerichteten Festigkeitsträgern aus Nylon aufgelegt.

Die relativ große Masse sowie das Biegeverhalten des Gürtels in der Gürtelebene beim Durchlaufen des Latsches in der Bodenaufstandsfläche beeinflussen in negativer Weise den Rollwiderstand des Fahrzeugluftreifens. Dieser wird üblicherweise dann durch zusätzliche Maßnahmen am Fahrzeugluftreifen reduziert.

Aus der DE2431835A1 ist ein Fahrzeugluftreifen mit einer gürtelartigen Verstärkung bekannt, bei dem zwei Materialstreifen mit Festigkeitsträgern ausgebildet sind, die sich jeweils von einem Rand der Verstärkung nach axial innen erstrecken und dort axial überlappen. Die Festigkeitsträger des Materialstreifen sind mit einem Winkel von 14 bis 45° zur Umfangsrichtung ausgerichtet und weisen in einer Ausführung eine gegenläufige Steigung auf. Axial außerhalb des Überlappungsbereichs sind jeweils zusätzliche Materialstreifen aufgelegt, deren Festigkeitsträger die gleiche Steigungsrichtung wie die Festigkeitsträger des darunter liegenden überlappenden Materialstreifens aufweisen. Bei dieser Ausbildung ist die Umfangssteifigkeit des Gürtels reduziert. Bei hohen Geschwindigkeiten kann dies zu Dauerhaltbarkeitsproblemen führen. Die Hochgeschwindigkeitseignung derartiger Reifen ist ohne zusätzliche Maßnahmen reduziert. Das Biegeverhalten des Gürtels in der Gürtelebene beim Durchlaufen des Latsches in der Bodenaufstandsfläche beeinflusst in negativer Weise den Rollwiderstand des Fahrzeugluftreifens.

Aus der DE 19 31268 ist ein derartiger gattungsgemäßer mit einer gürtelartigen Verstärkung bekannt, mit drei Gürtellagen, die alle jeweils Festigkeitsträger aufweisen, die schräg verlaufen. Die radial innere Gürtellage erstreckt sich dabei über die gesamte axiale Breite des Gürtels, wobei ihre Festigkeitsträger unter Einschluss eines Neigungswinkels von 20° zur Umfangsrichtung ausgerichtet sind. Die zweite und dritte Gürtellage erstrecken sich jeweils von einem unterschiedlichen Gürtellagenrand in Richtung Gürtellagenmitte und überlappen sich in axialer Richtung bis zu maximal 10mm. Ihre Festigkeitsträger sind jeweils unter Einschluss eines Neigungswinkels von 20° zur Umfangsrichtung mit gegenläufigem Steigungsverlauf ausgebildet. Der Gürtel fungiert daher im Wesentlichen wie ein Zweilagengürtel mit jeweils schräg verlaufenden Neigungswinkeln aller Festigkeitsträger und den hieraus resultierenden Nachteilen der reduzierten Umfangssteifigkeit des Gürtels. Die Neigungswinkel von nur 20° der Gürtellagen begrenzen zwar eine noch weitere Reduktion der Umfangssteifigkeit, allerdings zu Lasten der Quersteifigkeit des Gürtels. Auf einer Seite des Gürtels weisen darüber hinaus die unmittelbar aufeinander liegenden Gürtellagen sowohl den gleichen Neigungswinkel als auch die gleiche Steigungsrichtung auf. Auch bei dieser Ausbildung ist die Umfangssteifigkeit des Gürtels reduziert. Bei hohen Geschwindigkeiten kann dies zu Dauerhaltbarkeitsproblemen führen. Die Hochgeschwindigkeitseignung derartiger Reifen ist ohne zusätzliche Maßnahme reduziert. Das Biegeverhalten des Gürtels in der Gürtelebene beim Durchlaufen des Latsches in der Bodenaufstandsfläche beeinflusst in negativer Weise den Rollwiderstand des Fahrzeugluftreifens.

Der Erfindung liegt die Aufgabe zugrunde einen Fahrzeugluftreifen- insbesondere mit Hochgeschwindigkeitseignung - mit reduziertem Rollwiderstand zu schaffen.

Die Erfindung wird erfindungsgemäß durch die Ausbildung eines Fahrzeugluftreifens mit einer Karkasse, mit einem profilierten Laufstreifen und mit einem zwischen Karkasse und Laufstreifen ausgebildeten Gürtel, der aus mehreren in radialer Richtung R des Reifens übereinander angeordneten und jeweils in Umfangsrichtung U des Reifens über den gesamten Umfang des Reifens erstreckte Gürtellagen aus jeweils parallel zueinander ausgerichtet angeordneten in Gummi eingebetteten fadenförmigen Festigkeitsträgern besteht, und der Gürtel in axialer Richtung A des Reifens eine Gürtelbreite B aufweist, gemäß den Merkmalen von Anspruch 1 gelöst, bei dem der Gürtel drei Gürtellagen aufweist, wobei sich eine erste Gürtellage über die gesamte axiale Breite B des Gürtels erstreckt und die Festigkeitsträger dieser Gürtellage im Wesentlichen in Umfangsrichtung U ausgerichtet sind, wobei sich eine zweite Gürtellage über eine axiale Breite B₂ in axialer Richtung A des Reifens ausgehend von einem der beiden Randbereiche des Gürtels nach axial innen in Richtung des gegenüberliegenden Randbereichs des Gürtels und eine dritte Gürtellage über eine axiale Breite B₃ in axialer Richtung A des Reifens ausgehend von dem anderen der beiden Randbereiche des Gürtels nach axial innen in Richtung des gegenüberliegenden Randbereichs des Gürtels erstreckt, wobei sich die zweite und die dritte Gürtellage dabei axial über eine Breite C überlappen mit 0,1 *B ≤ C ≤ 0,3 *B, und wobei die Festigkeitsträger der zweiten Gürtellage einen Neigungswinkel α₂ zur Umfangsrichtung U des Fahrzeugluftreifens mit 46°≤ α₂ ≤60° - insbesondere mit 46°≤ α₂ ≤50° - aufweisen, wobei die Festigkeitsträger der dritten Gürtellage einen Neigungswinkel α₃ zur Umfangsrichtung U des Fahrzeugluftreifens mit 46°≤ α₃ ≤60° - insbesondere mit 46°≤ α₃ ≤50° - aufweisen und wobei die Steigungsrichtung der Festigkeitsträger der zweiten Gürtellage und der Festigkeitsträger der dritten Gürtellage längs ihrer axialen Erstreckung im Gürtel entgegengesetzt zu einander ausgebildet ist.

Auf diese Weise wird bei geringer Gürtelmasse durch die relativ großen Neigungswinkel α₂ und α₃ der zweiten und dritten Gürtellage und die erste Gürtellage mit in Umfangsrichtung gerichteten Festigkeitsträgern ein verbessertes Biegeverhalten des Gürtels in der Gürtelebene beim Durchlaufen des Latsches in der Bodenaufstandsfläche erreicht. Trotz erreichbarer hoher Umfangssteifigkeit und im wichtigen inneren Gürtelbereich vorhandenem Kreuzverband kann der Rollwiderstand reduziert werden. Die hohe Umfangssteifigkeit ermöglicht gute Hochgeschwindigkeitseignung und gute Dauerhaltbarkeit sowie gutes Traktions- und Bremsverhalten, die Kreuzlage aufgrund des hohen axialen Richtungsanteils der Festigkeitsträger gute Handling-Eigenschaften.

Besonders vorteilhaft ist die Ausbildung gemäß den Merkmalen von Anspruch 2, wobei für die Neigungswinkel α₂ und α₃ gilt: α₂ ≥ α₃ und insbesondere α₂ = α₃. Durch gezielte Abstimmung der Neigungswinkel kann die Höhe der Strukturseitenkraft individuell eingestellt werden. Damit kann ein leichtes Verziehen des Reifens aus der vorgegebenen Laufrichtung provoziert werden, womit der Geradeauslauf auf Fahrbahnen unter einem Winkel zur Querrichtung sichergestellt werden kann.

Besonders vorteilhaft ist die Ausbildung gemäß den Merkmalen von Anspruch 3, wobei für die axiale Breite B₂ und die axiale Breite B₃ gilt: B₂ ≥ B₃ und insbesondere B₂ = B₃. Durch gezielte Abstimmung der Breiten ist ein gezielt asymmetrischer Gürtelaufbau ermöglicht, um zum Beispiel in der am Fahrzeug hoch belasteten Außenschulter des Reifens mehr Steifigkeit auszubilden, wodurch die Handling-Eigenschaften verbessert werden können.

Besonders vorteilhaft ist die Ausbildung gemäß den Merkmalen von Anspruch 4, wobei die Festigkeitsträger der ersten Gürtellage Korde aus Monofilamenten oder aus Multifilamenten ausgebildet sind. Monofilamente ermöglichen eine weitere Reduktion der zur Herstellung erforderlichen Materialmenge.

Besonders vorteilhaft ist die Ausbildung gemäß den Merkmalen von Anspruch 5, wobei die Festigkeitsträger der ersten Gürtellage Festigkeitsträger aus Stahl oder Aramid sind. Die genannten Festigkeitsträger ermöglichen bei hohem E-Modul ausreichende Umfangssteifigkeit.

Besonders vorteilhaft ist die Ausbildung gemäß den Merkmalen von Anspruch 6, wobei die Festigkeitsträger der zweiten und dritten Gürtellage jeweils Korde aus Monofilamenten oder aus Multifilamenten ausgebildet sind. Monofilamente ermöglichen eine weitere Reduktion der zur Herstellung erforderlichen Materialmenge.

Besonders vorteilhaft ist die Ausbildung gemäß den Merkmalen von Anspruch 7, wobei die Festigkeitsträger der zweiten und dritten Gürtellage jeweils Festigkeitsträger aus Stahl oder aus Aramid sind. Die genannten Festigkeitsträger ermöglichen einen Aufbau von hoher Seitensteifigkeit. Eine Kopplung mit Umfangskorden etwa gleichen E-Moduls ermöglicht zusätzlich eine weitere Handling-Optimierung. Die individuelle Handling-Anpassung am Fahrzeug erfolgt dann vorteilerhafter Weise durch Auswahl der Neigungswinkel.

Besonders vorteilhaft ist die Ausbildung gemäß den Merkmalen von Anspruch 8, wobei die erste Gürtellage in radialer Anordnung im Reifen unterhalb der zweiten und dritten Gürtellage ausgebildet ist. Da die untere Gürtellage aufgrund ihrer 0°-Lage mit einer Karkasse radialer Bauart mit 90°-Lage keine mechanische Kopplung eingeht, kann die Kopplung der Winkellagen des Gürtels mit der Karkasse minimiert werden. Hierdurch kann eine andere Bodenaufstandsfläche ausgebildet werden.

Besonders vorteilhaft ist die Ausbildung gemäß den Merkmalen von Anspruch 9, wobei die erste Gürtellage in radialer Anordnung im Reifen oberhalb der zweiten und dritten Gürtellage ausgebildet ist. Aufgrund des fehlenden Berührkontaktes zwischen der 0°-Gürtellage und der Karkasse ist auch bei Karkassen radialer Bauart eine höhere Fertigungstoleranz möglich.

Die Erfindung wird im Folgenden an Hand der in den Fig. 1 bis 3 schematisch dargestellten Ausführungsbeispiele näher erläutert. Darin zeigen
- Fig. 1: erfindungsgemäßen Fahrzeugluftreifen in Querschnittsdarstellung,
- Fig. 2: Querschnittsdarstellung der Gürtels des Fahrzeugluftreifens von Fig.1,
- Fig. 3: Draufsicht auf Gürtel des Fahrzeugluftreifens gemäß Schnitt III-III von Fig. 1.

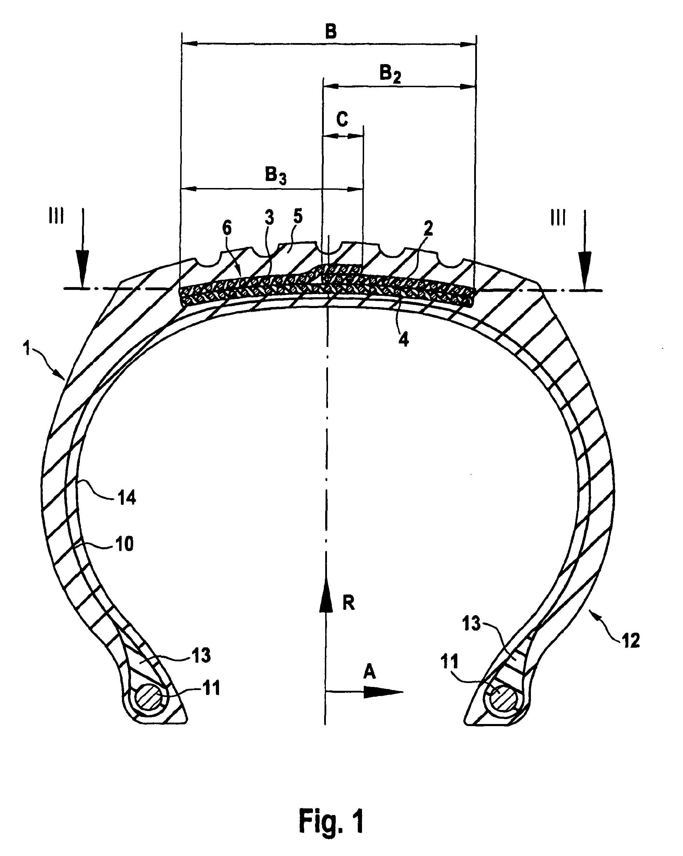

In Fig. 1 ist der Aufbau eines Fahrzeugluftreifens 1 für Personenkraftwagen beispielhaft dargestellt, bei dem in einem zur Befestigung des Fahrzeugluftreifens auf einer Felge ausgebildeten rechten Wulstbereich um einen Wulstkern 11 mit Kernreiter 13 eine erste Karkassenlage einer Karkasse 10 radialer Bauart außerhalb einer luftundurchlässigen Innenschicht 14 über den rechten Schulterbereich und die Zenitebene zu dem linken Schulterbereich und den im linken Wulstbereich ausgebildeten Wulstkern 11 mit Kernreiter 13 reicht, um den sie in herkömmlicher Weise gelegt ist. Über der ersten Karkassenlage ist in herkömmlicher Weise eine zweite Karkassenlage der Karkasse 10 gelegt, die sich ebenfalls von der in Fig.1 rechts dargestellten Seite des Reifens bis zur links dargestellten Seite erstreckt. In herkömmlicher Weise ist im Wulstbereich ein nicht näher dargestellter Wulststreifen bekannter Art, ein nicht näher dargestellter Wulstverstärker bekannter Art und ein nicht näher dargestelltes Hornprofil bekannter Art ausgebildet und von dem Hornprofil ausgehend bis in den Schulterbereich reichend ein Seitenwandgummimaterial 12 aufgelegt.

Über den Umfang des Fahrzeugluftreifens reichen außerhalb der Karkassenlagen radialer Bauart angeordnet mehrere Gürtellagen eines Gürtels 6 mit in Kautschuk eingebetteten Festigkeitsträgern. Im Schulterbereich sind in bekannter Weise zusätzlich nicht näher dargestellte Schulterstreifen bekannter Art aufgelegt. Den Abschluss des Reifenaufbaus bildet in bekannter Weise ein profilierter Laufstreifen 5 bekannter Art.

Wie in den Figuren 1, 2 und 3 zu erkennen ist, ist der Gürtel 6 in axialer Richtung A des Fahrzeugluftreifens mit einer Gürtelbreite B ausgebildet. Der Gürtel 6 ist aus drei Gürtellagen 4, 2 und 3 aufgebaut.

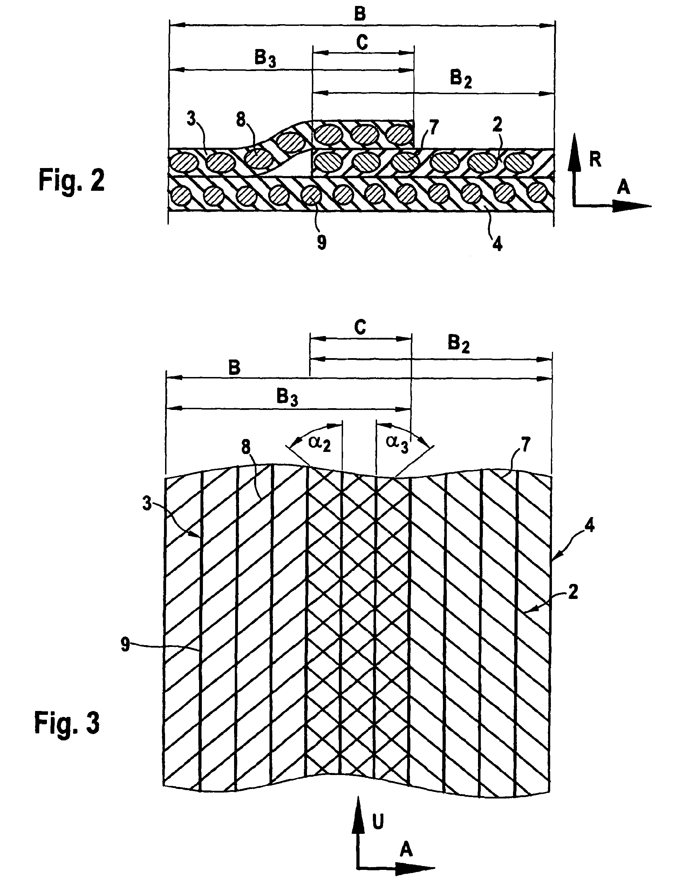

Wie in den Figuren 2 und 3 zu erkennen ist, ist die Gürtellage 4 eine Lage von in Gummi eingebetteten parallelen Festigkeitsträgern 9, bei der die Festigkeitsträger 9 in Umfangsrichtung U des Fahrzeugluftreifens ausgerichtet sind. Die Gürtellage 4 erstreckt sich in Umfangsrichtung U des Fahrzeugluftreifens über den gesamten Umfang des Fahrzeugluftreifens und in axialer Richtung A über die gesamte Gürtelbreite B.

Radial oberhalb der Gürtellage 4 sind die beiden weiteren Gürtellagen 2 und 3 aufgebaut, wobei sich die Gürtellage 2 von dem in Fig.2 und Fig. 3 rechten axialen Rand des Gürtels in axialer Richtung A in Richtung des linken axialen Randes über eine Erstreckungsbreite B₂ erstreckt und die Gürtellage 3 von dem in den Figuren 2 und 3 linken Gürtelrand in axialer Richtung A zum rechten Gürtelrand hin über eine Erstreckungsbreite B₃ erstreckt. Die Gürtellage 2 ist dabei über ihre gesamte axiale Erstreckung in flächigem Berührkontakt zur Gürtellage 4. Die Gürtellage 3 liegt vom linken Rand des Gürtels ausgehend in flächigem Berührkontakt zur Gürtellage 4 auf der Gürtellage 4 und ab der axialen Position des linken Randes der Gürtellage 2 unter axialer Überlappung in flächigem Berührkontakt zur Gürtellage 2 auf der Gürtellage 2 auf. Die beiden Gürtellagen 3 und 2 überlappen sich dabei in axialer Richtung A um ein Erstreckungsmaß C mit (0,1 B) ≤ C ≤ (0,3 B). In dem gezeigten Ausführungsbeispiel ist C = (0,25 B) gewählt.

Die Gürtellagen 2 und 3 erstrecken sich in Umfangsrichtung U des Fahrzeugluftreifens über den gesamten Umfang des Fahrzeugluftreifens. Die Gürtellage 2 ist dabei aus einer Vielzahl von in Umfangsrichtung hintereinander angeordneten parallelen in Kautschuk eingebetteten Festigkeitsträgern 7 ausgebildet, die sich jeweils über die gesamte Erstreckung der Gürtellage 2 in axialer Richtung A durch die Gürtellage 2 hindurch erstrecken.

Die Gürtellage 3 ist aus einer Vielzahl von in Umfangsrichtung U hintereinander angeordneten parallelen in Kautschuk eingebetteten Festigkeitsträgern 8 ausgebildet, die sich über die gesamte Erstreckung der Gürtellage 3 in axialer Richtung A durch die Gürtellage 3 hindurch erstrecken.

Die Festigkeitsträger 7 der Gürtellage 2 schließen zur Umfangsrichtung U in der in Fig. 1 gestrichelt dargestellten Äquatorebene des Fahrzeugluftreifens einen Neigungswinkel α₂ zur Umfangsrichtung U ein. Die Festigkeitsträger 8 der Gürtellage 3 schließen in der in Fig. 1 gestrichelt dargestellten Äquatorebene des Reifens einen Neigungswinkel α₃ zur Umfangsrichtung U ein. Die Neigung der Festigkeitsträger 7 der Gürtellage 2 und die Neigungsrichtung der Festigkeitsträger 8 der Gürtellage 3 ist in axialer Richtung A gesehen gegenläufig zueinander gerichtet.

Wie in Fig. 3 zu erkennen ist, bilden die Festigkeitsträger 7 der Gürtellage 2 und die Festigkeitsträger 8 der Gürtellage 3 im axialen Erstreckungsbereich C des Gürtels 6 einen Kreuzverband.

Die Neigungswinkel α₂ sind dabei so gewählt, dass für α₂ gilt: 46° ≤ α₂ ≤ 60°. Bevorzugt ist die Ausbildung von α₂ mit 46°≤ α₂ ≤ 50°. In dem dargestellten Ausführungsbeispiel ist α₂ = 48° gewählt.

Die Neigungswinkel α₃ sind dabei so gewählt, dass für α₃ gilt: 46° ≤ α₃ ≤ 60°. Bevorzugt ist die Ausbildung von α₃ mit 46°≤ α₃ ≤ 50°. In dem dargestellten Ausführungsbeispiel ist α₃ = 48° gewählt.

In dem dargestellten Ausführungsbeispiel ist α₂ = α₃ = 48° gewählt. In einem nicht dargestellten alternativen Ausführungsbeispiel ist α₂ > α₃ gewählt. In einem anderen nicht dargestellten alternativen Ausführungsbeispiel ist α₃ > α₂ gewählt.

In dem gezeigten Ausführungsbeispiel ist B₂ = B₃ gewählt. In einem alternativen - nicht dargestellten Ausführungsbeispiel ist B₃ > B₂ gewählt. In einem anderen nicht dargestellten Ausführungsbeispiel ist B₂ > B₃ gewählt.

Die Festigkeitsträger 9 sind im gezeigten Ausführungsbeispiel Korde bekannter Art. Ebenso sind die Festigkeitsträger 7 und 8 im gezeigten Ausführungsbeispiel Korde bekannter Art.

Die Korde sind in einer Ausführung Multifilamente. In anderer Ausführung sind die Korde aus Monofilamenten bekannter Art hergestellt.

Die Festigkeitsträger 7, 8 und 9 sind in der dargestellten Ausführung jeweils Stahlkorde bekannter Art.

In alternativer Ausbildung sind die Festigkeitsträger 7 Korde aus Aramid.

In weiterer alternativer Ausbildung sind die Festigkeitsträger 8 Korde aus Aramid.

In weiterer alternativer Ausbildung sind die Festigkeitsträger 9 Korde aus Aramid.

Im dargestellten Ausführungsbeispiel ist die Gürtellage 4 radial unterhalb der Gürtellagen 2 und 3 ausgebildet.

In alternativer - nicht dargestellter - Ausführung ist die Gürtellage 4 radial oberhalb der Gürtellagen 2 und 3 ausgebildet.

### Bezugszeichenliste

### (Teil der Beschreibung)

- 1: Fahrzeugluftreifen
- 2: Gürtellage
- 3: Gürtellage
- 4: Gürtellage
- 5: Laufstreifen
- 6: Gürtel
- 7: Festigkeitsträger
- 8: Festigkeitsträger
- 9: Festigkeitsträger
- 10: Karkasse
- 11: Wulstkern
- 12: Seitenwandgummistreifen
- 13: Kernreiter
- 14: Innenschicht

## Patentansprüche

1. Fahrzeugluftreifen mit einer Karkasse (10), mit einem profilierten Laufstreifen (5) und mit einem zwischen Karkasse (10) und Laufstreifen (5) ausgebildeten Gürtel (6), der aus mehreren in radialer Richtung R des Reifens übereinander angeordneten und jeweils in Umfangsrichtung U des Reifens über den gesamten Umfang des Reifens erstreckte Gürtellagen aus jeweils parallel zueinander ausgerichtet angeordneten in Gummi eingebetteten fadenförmigen Festigkeitsträgern besteht, und der Gürtel in axialer Richtung A des Reifens eine Gürtelbreite B aufweist,
wobei der Gürtel (6) drei Gürtellagen (2,3,4) aufweist,
wobei sich eine erste Gürtellage (4) über die gesamte axiale Breite B des Gürtels (6) erstreckt,
wobei sich eine zweite Gürtellage (2) über eine axiale Breite B₂ in axialer Richtung A des Reifens ausgehend von einem der beiden Randbereiche des Gürtels (6) nach axial innen in Richtung des gegenüberliegenden Randbereichs des Gürtels (6) und eine dritte Gürtellage (3) über eine axiale Breite B₃ in axialer Richtung A des Reifens ausgehend von dem anderen der beiden Randbereiche des Gürtels (6) nach axial innen in Richtung des gegenüberliegenden Randbereichs des Gürtels (6) erstreckt, wobei sich die zweite (2) und die dritte (3) Gürtellage dabei axial über eine Breite C überlappen, und
wobei die Festigkeitsträger (7) der zweiten Gürtellage (2) einen Neigungswinkel α₂ zur Umfangsrichtung U des Fahrzeugluftreifens und die Festigkeitsträger (8) der dritten Gürtellage (3) einen Neigungswinkel α₃ zur Umfangsrichtung U des Fahrzeugluftreifens aufweisen, wobei die Steigungsrichtung der Festigkeitsträger (7) der zweiten Gürtellage (2) und die Steigungsrichtung der Festigkeitsträger (8) der dritten Gürtellage (3) längs ihrer axialen Erstreckung im Gürtel (6) entgegengesetzt zu einander ausgebildet ist,
**dadurch gekennzeichnet,**
**dass** die Festigkeitsträger (9) der ersten Gürtellage (4) im Wesentlichen in Umfangsrichtung U ausgerichtet sind,
**dass** sich die zweite (2) und die dritte (3) Gürtellage dabei axial über eine Breite C mit 0,1*B≤C≤ 0,3* B überlappen, und
wobei die Festigkeitsträger (7) der zweiten Gürtellage (2) einen Neigungswinkel α₂ zur Umfangsrichtung U des Fahrzeugluftreifens mit 46°≤ α₂ ≤60° - insbesondere mit 46°≤ α₂≤50° - aufweisen, wobei die Festigkeitsträger (8) der dritten Gürtellage (3) einen Neigungswinkel α₃ zur Umfangsrichtung U des Fahrzeugluftreifens mit 46°≤α₃≤60° - insbesondere mit 46°≤α₃≤50° - aufweisen.

2. Fahrzeugluftreifen gemäß den Merkmalen von Anspruch 1,
wobei für die Neigungswinkel α₂ und α₃ gilt: α₂ ≥ α₃ und insbesondere α₂ = α₃.

3. Fahrzeugluftreifen gemäß einem oder mehreren der vorangegangenen Ansprüche, wobei für die axiale Breite B₂ und die axiale Breite B₃ gilt: B₂ ≥ B₃ und insbesondere B₂ = B₃.

4. Fahrzeugluftreifen gemäß einem oder mehreren der vorangegangenen Ansprüche, wobei die Festigkeitsträger (9) der ersten Gürtellage (4) Korde aus Monofilamenten oder aus Multifilamenten ausgebildet sind.

5. Fahrzeugluftreifen gemäß einem oder mehreren der vorangegangenen Ansprüche, wobei die Festigkeitsträger (9) der ersten Gürtellage (4) textile Festigkeitsträger oder Festigkeitsträger aus Stahl sind.

6. Fahrzeugluftreifen gemäß einem oder mehreren der vorangegangenen Ansprüche, wobei die Festigkeitsträger (7,8) der zweiten (2) und dritten (3) Gürtellage jeweils Korde aus Monofilamenten oder aus Multifilamenten ausgebildet sind.

7. Fahrzeugluftreifen gemäß einem oder mehreren der vorangegangenen Ansprüche, wobei die Festigkeitsträger (7,8) der zweiten (2) und dritten (3) Gürtellage jeweils Festigkeitsträger aus Stahl oder aus Aramid sind.

8. Fahrzeugluftreifen gemäß einem oder mehreren der vorangegangenen Ansprüche, wobei die erste Gürtellage (4) in radialer Anordnung im Reifen unterhalb der zweiten (2) und dritten (3) Gürtellage ausgebildet ist.

9. Fahrzeugluftreifen gemäß einem oder mehreren der vorangegangenen Ansprüche, wobei die erste Gürtellage (4) in radialer Anordnung im Reifen oberhalb der zweiten (2) und dritten (3) Gürtellage ausgebildet ist.

## Claims

1. Pneumatic vehicle tyre with a carcass (10), with a profiled tread rubber (5) and with a breaker belt (6), which is formed between the carcass (10) and the tread rubber (5) and comprises a number of belt plies arranged one on top of the other in the radial direction R of the tyre, respectively made to extend in the circumferential direction U of the tyre over the entire circumference of the tyre and each consisting of filamentary reinforcing elements embedded in rubber and arranged such that they are aligned parallel to one another, and the breaker belt having in the axial direction A of the tyre a belt width B,
the breaker belt (6) having three belt plies (2, 3, 4),
a first belt ply (4) extending over the entire axial width B of the breaker belt (6),
a second belt ply (2) extending over an axial width B₂ in the axial direction A of the tyre from one of the two peripheral regions of the breaker belt (6) axially inwards in the direction of the opposite peripheral region of the breaker belt (6) and
a third belt ply (3) extending over an axial width B₃ in the axial direction A of the tyre from the other of the two peripheral regions of the breaker belt (6) axially inwards in the direction of the opposite peripheral region of the breaker belt (6), the second belt ply (2) and the third belt ply (3) thereby overlapping axially over a width C, and
the reinforcing elements (7) of the second belt ply (2) having an angle of inclination α₂ in relation to the circumferential direction U of the pneumatic vehicle tyre and the reinforcing elements (8) of the third belt ply (3) having an angle of inclination α₃ in relation to the circumferential direction U of the pneumatic vehicle tyre, the sloping direction of the reinforcing elements (7) of the second belt ply (2) and the sloping direction of the reinforcing elements (8) of the third belt ply (3) being formed as opposing each other along their axial extent in the breaker belt (6),
**characterized**
**in that** the reinforcing elements (9) of the first belt ply (4) are aligned substantially in the circumferential direction U,
**in that** the second belt ply (2) and the third belt ply (3) thereby overlap axially over a width C where 0.1*B ≤ C ≤ 0.3*B, and
the reinforcing elements (7) of the second belt ply (2) have an angle of inclination α₂ in relation to the circumferential direction U of the pneumatic vehicle tyre where 46° ≤ α₂ ≤ 60° - in particular where 46° ≤ α₂ ≤ 50° - while the reinforcing elements (8) of the third belt ply (3) have an angle of inclination α₃ in relation to the circumferential direction U of the pneumatic vehicle tyre where 46° ≤ α₃ ≤ 60° - in particular where 46° ≤ α₃ ≤ 50°.

2. Pneumatic vehicle tyre according to the features of Claim 1, wherein, for the angles of inclination α₂ and α₃: α₂ ≥ α₃ and, in particular, α₂ = α₃.

3. Pneumatic vehicle tyre according to one or more of the preceding claims, wherein, for the axial width B₂ and the axial width B₃: B₂ ≥ B₃ and, in particular, B₂ = B₃.

4. Pneumatic vehicle tyre according to one or more of the preceding claims, the reinforcing elements (9) of the first belt ply (4) being formed as cords of monofilaments or of multifilaments.

5. Pneumatic vehicle tyre according to one or more of the preceding claims, the reinforcing elements (9) of the first belt ply (4) being textile reinforcing elements or reinforcing elements of steel.

6. Pneumatic vehicle tyre according to one or more of the preceding claims, the reinforcing elements (7, 8) of the second belt ply (2) and the third belt ply (3) each being formed as cords of monofilaments or of multifilaments.

7. Pneumatic vehicle tyre according to one or more of the preceding claims, the reinforcing elements (7, 8) of the second belt ply (2) and the third belt ply (3) each being reinforcing elements of steel or of aramid.

8. Pneumatic vehicle tyre according to one or more of the preceding claims, the first belt ply (4) being formed below the second belt ply (2) and the third belt ply (3) in radial arrangement in the tyre.

9. Pneumatic vehicle tyre according to one or more of the preceding claims, the first belt ply (4) being formed above the second belt ply (2) and the third belt ply (3) in radial arrangement in the tyre.

## Revendications

1. Bandage pneumatique pour roue de véhicule, présentant une carcasse (10), une bande de roulement (5) profilée et une ceinture (6) formée entre la carcasse (10) et la bande de roulement (5) et constituée de plusieurs couches de ceinture constituées de renforts en forme de fils incorporés dans du caoutchouc et orientés parallèlement les uns aux autres,
les couches de ceinture étant disposées les unes au-dessus des autres dans la direction radiale R du bandage de roue et s'étendant toutes sur toute la périphérie du bandage de roue dans la direction périphérique U du bandage de roue,
la ceinture présentant une largeur B dans la direction axiale A du bandage de roue,
la ceinture (6) présentant trois couches de ceinture (2, 3, 4), à savoir
une première couche de ceinture (4) s'étendant sur toute la largeur axiale B de la ceinture (6),
une deuxième couche de ceinture (2) s'étendant sur une largeur axiale B₂ dans la direction axiale A du bandage de roue en partant d'une des deux bordures de la ceinture (6) et axialement vers l'intérieur en direction de la bordure opposée de la ceinture (6),
et une troisième couche de ceinture (3) s'étendant sur une largeur axiale B₃ dans la direction axiale A du bandage de roue, en partant de l'autre des deux bordures de la ceinture (6), axialement vers l'intérieur en direction de la bordure opposée de la ceinture (6),
la deuxième couche de ceinture (2) et la troisième couche de ceinture (3) se superposant axialement sur une largeur C,
les renforts (7) de la deuxième couche de ceinture (2) présentant un angle d'inclinaison α₂ par rapport à la direction périphérique U du bandage pneumatique pour roue de véhicule et les renforts (8) de la troisième couche de ceinture (3) présentant un angle d'inclinaison α₃ par rapport à la direction périphérique U du bandage pneumatique pour roue de véhicule,
la direction de la pente des renforts (7) de la deuxième couche de ceinture (2) et la direction de la pente des renforts (8) de la troisième couche de ceinture (3) étant opposées l'une à l'autre dans leur extension axiale dans la ceinture (6),
**caractérisé en ce que**
les renforts (9) de la première couche de ceinture (4) sont orientés essentiellement dans la direction périphérique U,
**en ce que** la deuxième couche de ceinture (2) et la troisième couche de ceinture (3) se superposent axialement sur une largeur C, avec 0,5 x B ≤ C ≤ 0,3 x B,
**en ce que** les renforts (7) de la deuxième couche de ceinture (2) présentent un angle d'inclinaison α₂ par rapport à la direction périphérique U du bandage pneumatique pour roue de véhicule, avec 46° ≤ α₂ ≤ 60° et en particulier 46° ≤ α₂ ≤ 50°, les renforts (8) de la troisième couche de ceinture (3) présentant un angle d'inclinaison α₃ par rapport à la direction périphérique U du bandage pour roue de véhicule, avec 46° ≤ α₃ ≤ 60° et en particulier 46° ≤ α₃ ≤ 50°.

2. Bandage pneumatique pour roue de véhicule selon les caractéristiques de la revendication 1, dans lequel les angles d'inclinaison α₂ et α₃ vérifient la relation α₂ ≥ α₃ et en particulier la relation α₂ = α₃.

3. Bandage pneumatique pour roue de véhicule selon l'une ou plusieurs des revendications précédentes, dans lequel la largeur axiale B₂ et la largeur axiale B₃ vérifient la relation B₂ ≥ B₃ et en particulier la relation B₂ = B₃.

4. Bandage pneumatique pour roue de véhicule selon l'une ou plusieurs des revendications précédentes, dans lequel les renforts (9) de la première couche de ceinture (4) sont des câbles en monofilaments ou en multifilaments.

5. Bandage pneumatique pour roue de véhicule selon l'une ou plusieurs des revendications précédentes, dans lequel les renforts (9) de la première couche de ceinture (4) sont des renforts textiles ou des renforts en acier.

6. Bandage pneumatique pour roue de véhicule selon l'une ou plusieurs des revendications précédentes, dans lequel les renforts (7, 8) de la deuxième couche de ceinture (2) et de la troisième couche de ceinture (3) sont des câbles en monofilaments ou en multifilaments.

7. Bandage pneumatique pour roue de véhicule selon l'une ou plusieurs des revendications précédentes, dans lequel les renforts (7, 8) de la deuxième couche de ceinture (2) et de la troisième couche de ceinture (3) sont des renforts en acier ou en aramide.

8. Bandage pneumatique pour roue de véhicule selon l'une ou plusieurs des revendications précédentes, dans lequel la première couche de ceinture (4) est agencée radialement dans le bandage de roue en dessous de la deuxième couche de ceinture (2) et de la troisième couche de ceinture (3).

9. Bandage pneumatique pour roue de véhicule selon l'une ou plusieurs des revendications précédentes, dans lequel la première couche de ceinture (4) est agencée radialement dans le bandage de roue au-dessus de la deuxième couche de ceinture (2) et de la troisième couche de ceinture (3).
